# EUROPÄISCHE PATENTANMELDUNG

(11) **EP 4 180 931 A1**
(43) Veröffentlichungstag der Anmeldung: **17.05.2023**
(21) Anmeldenummer: 21207807.5
(22) Anmeldetag: 11.11.2021
(51) Int. Cl.: G06F 3/04847, G06F 3/04883, G06F 3/04886, B60K 35/00

(54) **BENUTZERSCHNITTSTELLENGERÄT MIT BERÜHRUNGSEMPFINDLICHEM BILDSCHIRM**

(71) Anmelder: SECO Northern Europe GmbH, 21079 Hamburg (DE)
(72) Erfinder: Die Erfindernennung liegt noch nicht vor
(74) Vertreter: Fuchs Patentanwälte Partnerschaft mbB

(57) **Zusammenfassung**

Ein Benutzerschnittstellengerät (100; 300; 410) umfasst wenigstens einen berührungsempfindlichen Bildschirm (110; 310). Der berührungsempfindliche Bildschirm (110; 310) umfasst eine Anzeigeeinheit (115), die dazu ausgebildet ist, eine grafische Anzeige (140) einer Benutzerschnittstelle (150) auszugeben, und einen Berührungssensor (120), der dazu ausgebildet ist, eine Berührung des Benutzerschnittstellengeräts durch einen Benutzer im Bereich der grafischen Anzeige (140) der Benutzerschnittstelle (150) zu erfassen. Das Benutzerschnittstellengerät umfasst ferner wenigstens eine Prozessoreinheit (160), die mit dem berührungsempfindlichen Bildschirm (110) kommunikativ verbunden ist und die dazu ausgebildet ist, ein Bildsignal, das der grafischen Anzeige (140) der Benutzerschnittstelle (150) zugeordnet ist, zur Ausgabe mittels der Anzeigeeinheit (115) auszugeben, und ein Eingabesignal, das auf eine Berührung des Benutzerschnittstellengeräts durch den Benutzer im Bereich der grafischen Anzeige (140) der Benutzerschnittstelle (150) hinweist, von dem Berührungssensor (120) zu empfangen. Der berührungsempfindliche Bildschirm (110) umfasst ferner eine Abdeckung (130; 330) mit wenigstens einer Reliefierung (135a - 135d; 335a - 335h), die im Bereich der grafischen Anzeige (140) angeordnet ist, und die Benutzerschnittstelle (150) weist wenigstens ein Bedienelement (155a - 155d; 412) auf, wobei eine Anzeige (145a - 145d) des wenigstens einen Bedienelements (155a - 155d; 412) mittels der Anzeigeeinheit (115) im Bereich der wenigstens einen Reliefierung (135a - 135d; 335a - 335h) erfolgt.

## Beschreibung

Die vorliegende Anmeldung betrifft ein Benutzerschnittstellengerät gemäß dem Oberbegriff von Anspruch 1. Die vorliegende Anmeldung betrifft ferner ein System umfassend ein solches Benutzerschnittstellengerät.

Zum Bedienen steuerbarer Geräte, insbesondere komplexer und/oder stationärer Geräte oder Anlagen, ist es bekannt, Benutzerschnittstellen unter Verwendung von berührungsempfindlichen Bildschirmen, auch bekannt als Touch-Bildschirme oder Touch-Screens, bereitzustellen. Für die Bedienung komplexer Geräte hat die Verwendung eines berührungsempfindlichen Bildschirms als Teil der Benutzerschnittstelle oft den Vorteil, dass darüber sowohl Eingabegesten des Benutzers zum Steuern von Gerätefunktionen empfangen werden können als auch Informationen, die für die Bedienung des Geräts relevant sein können, an den Benutzer ausgegeben werden können.

### Hintergrund der Erfindung

Berührungsempfindliche Bildschirme bieten zudem den Vorteil, dass sie bewegliche und/oder weit vorstehende Bedienelemente, wie Schalter, Schiebe- oder Drehregler und Hebel, wie sie sich in herkömmlichen Benutzerschnittstellen oft finden, vermeidbar machen. Ein Aufwand für Wartung und Reinigung ist dadurch reduziert. Ebenso sind Gefahren aufgrund eines versehentlichen Hängenbleibens an vorstehenden Bedienelementen verringert.

Auf Seiten eines Herstellers steuerbarer Geräte bietet die Verwendung berührungsempfindlicher Bildschirme als Teil einer Benutzerschnittstelle außerdem Vorteile dadurch, dass diese üblicherweise in Verbindung mit einer programmierbaren Prozessoreinheit für verschiedene Anwendungen bzw. Geräte verhältnismäßig frei konfiguriert, insbesondere programmiert, werden können. Dadurch entfällt für einen Hersteller weitgehend eine Notwendigkeit, anwendungs- bzw. gerätspezifische Benutzerschnittstellengeräte als Hardware herzustellen bzw. vorzuhalten.

Bei der Verwendung herkömmlicher berührungsempfindlicher Bildschirme als Teil von Benutzerschnittstellen ergeben sich jedoch oft Nachteile daraus, dass zu ihrer Bedienung ein verhältnismäßig hohes Maß an Aufmerksamkeit vom Benutzer verlangt wird. So wird ein Benutzer typischerweise nur visuell auf das Vorhandensein eines Bedienelements innerhalb des Bildschirmbereichs hingewiesen. Bedienelemente in Form von bedienbaren Anzeigefeldern sind dabei zudem oft nicht mit Sicherheit von Feldern, die nur der Informationsausgabe, beispielsweise zur Ausgabe eines Gerätezustands an den Benutzer, dienen, zu unterscheiden. Zudem sind innerhalb des Anzeigebereichs des Bildschirms oft mehrere Bedienelemente dicht nebeneinander angeordnet. Die Gefahr einer Fehlbedienung des Geräts durch versehentliches Verfehlen des beabsichtigten Bedienelements bei der Benutzereingabe ist dadurch erhöht. Darüber hinaus gestatten berührungsempfindliche Bildschirme typischerweise die Erfassung verschiedener Eingabegesten, wie etwa Tastgesten, Gleit-, Schiebe-, und Drehgesten, wobei die zur Bedienung eines Bedienelements jeweils vorgesehene Eingabegeste für einen Benutzer oft nicht intuitiv erkennbar ist.

Davon ausgehend besteht eine Aufgabe darin, ein Benutzerschnittstellengerät bereitzustellen, das eine sichere, intuitive und komfortable Bedienung begünstigt und das für vielfältige Anwendungen verwendbar ist.

Diese Aufgabe wird durch die Bereitstellung eines Benutzerschnittstellengeräts mit den Merkmalen gemäß dem kennzeichnenden Teil von Anspruch 1 gelöst sowie durch Bereitstellung eines Systems gemäß Anspruch 14.

### Beschreibung der Erfindung

Gemäß einem ersten Aspekt wird demnach ein Benutzerschnittstellengerät vorgestellt. Das Benutzerschnittstellengerät umfasst wenigstens einen berührungsempfindlichen Bildschirm, der eine Anzeigeeinheit, die dazu ausgebildet ist, eine grafische Anzeige einer Benutzerschnittstelle auszugeben, und einen Berührungssensor, der dazu ausgebildet ist, eine Berührung des Benutzerschnittstellengeräts durch einen Benutzer im Bereich der grafischen Anzeige der Benutzerschnittstelle zu erfassen, umfasst. Das Benutzerschnittstellengerät umfasst ferner wenigstens eine Prozessoreinheit, die mit dem berührungsempfindlichen Bildschirm kommunikativ verbunden ist und die dazu ausgebildet ist, ein Bildsignal, das der grafischen Anzeige der Benutzerschnittstelle zugeordnet ist, zur Ausgabe mittels der Anzeigeeinheit auszugeben, und ein Eingabesignal, das auf eine Berührung des Benutzerschnittstellengeräts durch den Benutzer im Bereich der grafischen Anzeige der Benutzerschnittstelle hinweist, von dem Berührungssensor zu empfangen. Der berührungsempfindliche Bildschirm umfasst ferner eine Abdeckung mit wenigstens einer Reliefierung, die im Bereich der grafischen Anzeige angeordnet ist. Zudem weist die Benutzerschnittstelle wenigstens ein Bedienelement auf, wobei eine Anzeige des wenigstens einen Bedienelements mittels der Anzeigeeinheit im Bereich der wenigstens einen Reliefierung erfolgt.

Die Reliefierung kann gemäß einer Bediengeste, die zum Betätigen des Bedienelements vorgesehen ist, ausgebildet sein. Dabei kann die Bediengeste wenigstens eines aus einer Tastgeste, einer Gleitgeste und einer Drehgeste umfassen, und die Reliefierung kann wenigstens eines aus einer umgrenzten Fläche, einem Grat, einem Graben, einer Ausnehmung, einer Fräsung, einem Vorspung, einer Vorkragung, einer Wölbung und einer Rundung umfassen.

Die Anzeige des Bedienelements kann auf einen Stellzustand des Bedienelements hinweisen.

Die Benutzerschnittstelle kann mehrere Bedienelemente aufweisen. Dabei können die mehreren Bedienelemente wenigstens zwei verschiedene Bedienelemente umfassen, wobei zum Betätigen der verschiedenen Bedienelemente verschiedene Bediengesten vorgesehen sind.

Die Abdeckung kann materialeinstückig ausgebildet sein. Die wenigstens eine Reliefierung kann wenigstens eine Erhöhung in Bezug auf eine Oberflächenebene der Abdeckung umfassen. Zusätzlich oder alternativ kann die wenigstens eine Reliefierung wenigstens eine Vertiefung in Bezug auf eine Oberflächenebene der Abdeckung umfassen.

Die Prozessoreinheit kann programmierbar sein, um wahlweise jedwede von mehreren Benutzerschnittstellen mittels des Benutzerschnittstellengeräts bereitzustellen.

Das Benutzerschnittstellengerät kann ferner eine Speichervorrichtung aufweisen, die mit der Prozessoreinheit kommunikativ verbunden ist und die zum Speichern von Programmcode zur Ausführung mittels der Prozessoreinheit ausgebildet ist. Die Speichervorrichtung kann zum wahlweisen Aufspielen von Programmcode entsprechend verschiedenen Benutzerschnittstellen vorgesehen sein und/oder Programmcode enthalten zum wahlweisen Bereitstellen jedweder von mehreren Benutzerschnittstellen mittels des Benutzerschnittstellengeräts.

Jedwede der mehreren Benutzerschnittstellen kann wenigstens ein Bedienelement aufweisen, dessen Anzeige mittels der Anzeigeeinheit im Bereich der wenigstens einen Reliefierung erfolgt.

Die Prozessoreinheit kann ferner dazu ausgebildet sein, wenigstens teilweise auf der Grundlage des Eingangssignals ein Steuersignal zu erzeugen, das zum Steuern einer Gerätefunktion eines mittels des Benutzerschnittstellengeräts steuerbaren Geräts vorgesehen ist, und das Steuersignal an das steuerbare Gerät auszugeben.

Das Benutzerschnittstellengerät kann zur Befestigung an dem steuerbaren Gerät vorgesehen sein.

Das Benutzerschnittstellengerät kann ein mobiles Gerät sein.

Gemäß einem weiteren Aspekt wird System vorgestellt. Das System umfasst ein Benutzerschnittstellengerät der hier vorgestellten Art und wenigstens ein steuerbares Gerät, das wenigstens eine Gerätefunktion aufweist, die mittels des wenigstens einen Bedienelements des Benutzerschnittstellengeräts steuerbar ist.

### Kurzbeschreibung der Figuren

Weitere Merkmale, Ziele und Vorteile der Erfindung werden anhand der nachfolgenden Beschreibung und der Zeichnungen deutlich. Es zeigen:
Fig. 1 eine schematische Darstellung eines Benutzerschnittstellengeräts gemäß einem Ausführungsbeispiel;
Fig. 2 eine schematische Darstellung des Aufbaus eines berührungsempfindlichen Bildschirms gemäß einem Beispiel;
Fig. 3 eine perspektivische Ansicht eines Benutzerschnittstellengeräts gemäß einem weiteren Ausführungsbeispiel, und
Fig. 4 eine schematische Darstellung eines Systems gemäß einem weiteren Ausführungsbeispiel.

### Figurenbeschreibung

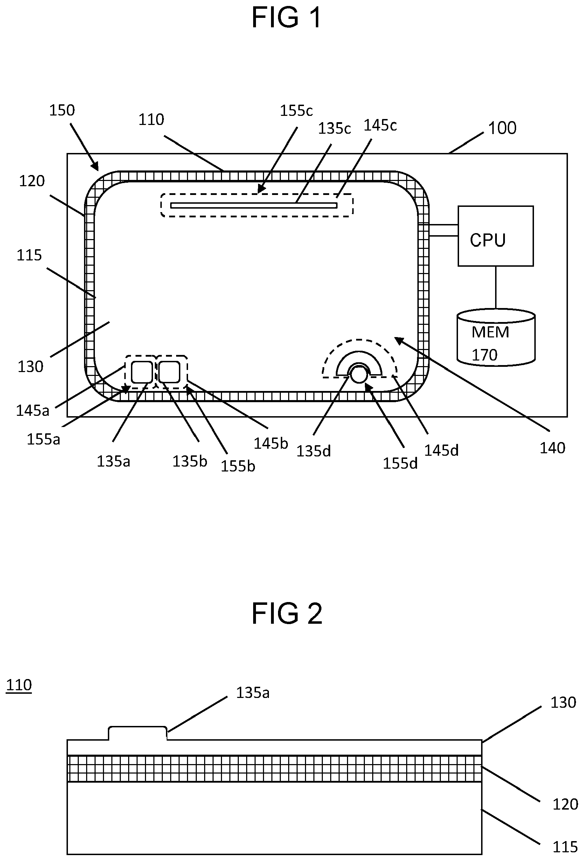

Fig. 1 zeigt schematisch und exemplarisch eine Vorderansicht eines Benutzerschnittstellengeräts 100. Das Benutzerschnittstellengerät 100 umfasst einen berührungsempfindlichen Bildschirm 110, eine Prozessoreinheit 160 und eine Speichervorrichtung 170. Die Prozessoreinheit 160 ist mit der Speichervorrichtung 170 und dem berührungsempfindlichen Bildschirm 110 jeweils kommunikativ verbunden. Der berührungsempfindliche Bildschirm 110 umfasst eine Anzeigeeinheit 115, einen Berührungssensor 120 und eine Abdeckung 130.

Der berührungsempfindliche Bildschirm 110 stellt eine Benutzerschnittstelle 150 für einen Benutzer des Benutzerschnittstellengeräts 100 bereit. Dabei ist die Anzeigeeinheit 115 dazu ausgebildet, eine grafische Anzeige 140 der Benutzerschnittstelle 150 auszugeben. Dazu empfängt die Anzeigeeinheit 115 von der Prozessoreinheit 160 ein Bildsignal, das der grafischen Anzeige 140 der Benutzerschnittstelle 150 zugeordnet ist. Außerdem ist der Berührungssensor 120 so angeordnet, dass er eine mögliche Berührung des Benutzerschnittstellengeräts, insbesondere eine Berührung der Abdeckung 130, durch einen Benutzer im Bereich der grafischen Anzeige 140 der Benutzerschnittstelle 150 erfasst.

Die Benutzerschnittstelle 150 weist in dem gezeigten Beispiel mehrere Bedienelemente 155a, 155b, 155c, 155d im Bereich der Anzeige 140 auf. Jedem der Bedienelemente 155a ― 155d ist eine Anzeige 145a, 145b, 145c, 145d des entsprechenden Bedienelements 155a, 155b, 155c, 155d mittels der Anzeigeeinheit 115 zugeordnet. Jedes Bedienelement 155a - 155d entspricht dabei einem bedienbaren Bereich der Benutzerschnittstelle 150. Das heißt, dass eine Bediengeste des Benutzers, die mittels des Berührungssensors 120 im Bereich jedwedes der Bedienelemente 155a - 155d erfasst wird, von der Prozessoreinheit 160 empfangen und als Benutzereingabe zum Zweck einer Bedienung verarbeitet werden kann.

In einigen Beispielen ist die Prozessoreinheit 160 dazu ausgebildet, wenigstens teilweise auf der Grundlage einer empfangenen Benutzereingabe, die im Bereich eines Bedienelements 155a - 155d erfolgt ist, ein entsprechendes Steuersignal zum Steuern einer Gerätefunktion gemäß der Benutzereingabe zu erzeugen. Das erzeugte Steuersignal wird anschließend beispielsweise an ein steuerbares Gerät (in Fig. 1 nicht dargestellt), das mit dem Benutzerschnittstellengerät 100 kommunikativ, insbesondere drahtlos oder verdrahtet kommunikativ, verbunden ist, ausgegeben, um eine Gerätefunktion des steuerbaren Geräts zu steuern.

In einigen Beispielen sind verschiedenen Bedienelementen 155a ― 155d der Benutzerschnittstelle 150 verschiedene steuerbare Gerätefunktionen eines steuerbaren Geräts zugeordnet. Zudem sind in dem Beispiel von Fig. 1 verschiedenen der Bedienelemente 155a ― 155d verschiedene Eingabegesten zum Betätigen des jeweiligen Bedienelements vorgesehen. Beispielsweise ist zur Betätigung jedes der Bedienelemente 155a, 155b eine Tastgeste vorgesehen. Im Unterschied dazu ist beispielsweise zur Betätigung des Bedienelements 155c eine Gleit- bzw. Schiebegeste vorgesehen. Zur Betätigung des Bedienelements 155d ist beispielsweise eine drehende Bewegung, etwa in Form einer drehenden Bewegung eines Berührungsmusters, insbesondere um einen geometrischen Mittelpunkt in einer Ebene des Bedienelements 155d, vorgesehen.

Im Bereich jedes der Bedienelemente 155a, 155b, 155c, 155d weist die Abdeckung 130 des berührungsempfindlichen Bildschirms 110 jeweils eine Reliefierung 135a, 135b, 135c, 135d auf. In bevorzugten Beispielen sind die Reliefierungen 135a - 135d so gestaltet, dass ein Benutzer sie bei Berühren der Abdeckung 130 leicht ertasten kann, sie jedoch ein Gleiten über die Oberfläche der Abdeckung 130 mit den Fingern oder anderen Teilen der Hand für den Benutzer nicht unverhältnismäßig behindern oder erschweren. Die Reliefierungen 135a - 135d sind wenigstens teilweise als Erhebungen und/oder als Vertiefungen in Bezug auf eine Oberfläche, beispielsweise eine Oberflächenebene, der Abdeckung 130 ausgebildet. Die Gesamthöhe einer Reliefierung beträgt dabei beispielsweise zwischen 0,1 und 4 Millimeter, bevorzugt zwischen 0,2 und 3 Millimeter, bevorzugt zwischen 0,4 und 2,5 Millimeter. In einigen Beispielen ist die Reliefierung dabei so gestaltet, dass sie auch bei einer Bedienung mit Handschuhen hinreichend ertastbar ist.

Die Reliefierungen 135a, 135b, 135c, 135d sind ferner gemäß Bediengesten ausgebildet, die zum Betätigen des jeweiligen Bedienelements 155a, 155b, 155c, 155d vorgesehen sind. Beispielsweise bilden die Reliefierungen 135a, 135b wenigstens teilweise umgrenzte Flächen. Die durch jede der Reliefierungen 135a, 135b wenigstens teilweise umgrenzte Fläche hat beispielsweise eine Größe, die zumindest annähernd einer üblichen Kontaktfläche bei einem Berühren der Abdeckung 130 mit einer Fingerkuppe entspricht, beispielsweise ca. 1 Quadratzentimeter. Dies entspricht der vorgesehenen Betätigung der Bedienelemente 155a, 155b mittels Tastgesten. Im Unterschied dazu umfasst die Reliefierung 135c beispielsweise einen gestreckten Grat und/oder einen gestreckten Graben entsprechend der zur Betätigung des Bedienelements 155c vorgesehenen Bediengeste in Form einer Gleit- oder Schiebegeste. Die Reliefierung 135d umfasst eine Rundung, besonders um einen geometrischen Mittelpunkt in einer Oberflächenebene der Abdeckung 130, entsprechend der zur Betätigung des Bedienelements 155d vorgesehenen Bediengeste in Form einer Drehgeste.

Die Bedienelemente 155a - 155d und die entsprechenden Reliefierungen 135a - 135d sind in dem gezeigten Beispiel in einem Randbereich der Anzeige 140 angeordnet. Dies begünstigt sowohl ein Auffinden der Bedienelemente 155a - 155d durch den Benutzer, beispielsweise durch Ertasten der Reliefierungen 135a - 135d, sowie eine weitgehend unbeeinträchtigte Ausgabe grafischer Informationen an den Benutzer in einem zusammenhängenden mittleren Bereich der Anzeige 140.

Die Reliefierungen 135a ― 135d gestatten einem Benutzer, sowohl visuell als auch haptisch die Position eines Bedienelements 155a - 155d und die zu seiner Betätigung vorgesehene Bediengeste zu erfassen. Dies erleichtert eine Bedienung der Benutzerschnittstelle 150. Insbesondere braucht ein Benutzer, der beispielsweise die Reliefierung 135c berührt, für eine weitere Betätigung des Bedienelements 155c seinen Blick nicht auf die Anzeige 140 gerichtet zu lassen, sondern kann mit dem Finger entlang der Reliefierung 135c gleitend eine Einstellung des Bedienelements 135c kontrolliert verändern, und dabei etwa das zu steuernde Gerät anstelle der Benutzerschnittstelle 150 im Blick halten.

In einigen Beispielen begünstigen die Reliefierungen 135a ― 135d auf diese Weise auch eine mögliche Blindbedienung der Benutzerschnittstelle 150. Dies ist vorteilhaft, beispielsweise bei einer Verwendung des Benutzerschnittstellengeräts 100 in einem Kraftfahrzeug, z.B. installiert in einem Armaturenbereich des Kraftfahrzeugs, um Funktionen des Kraftfahrzeugs, etwa Funktionen eines Unterhaltungssystems, eines Navigationssystems und/oder anderer Funktionen des Kraftfahrzeugs, zu steuern. In dem Fall kann sich ein Fahrer beispielsweise haptisch anhand der Reliefierungen 135a - 135d orientieren, um über die Benutzerschnittstelle 150 eine Kraftfahrzeugfunktion zu steuern, ohne dabei seine Aufmerksamkeit von dem Straßenverkehr abzuwenden.

Die Reliefierungen 135a ― 135d gestatten zudem, eine Sicherheit der Bedienung der Benutzerschnittstelle 150 zu erhöhen. Hat ein Benutzer beispielsweise eine der Reliefierungen 135a - 135d ertastet, ist eine Wahrscheinlichkeit, dass der Benutzer für eine nachfolgende Betätigung versehentlich auf ein benachbartes Bedienelement rutscht, erheblich reduziert. Dies gilt besonders im Vergleich zu einer konturlosen Bildschirmoberfläche. Zudem vermitteln die Reliefierungen 135a - 135d auch in diesem Zusammenhang dem Benutzer eine verbesserte Orientierung auf der Benutzerschnittstelle 150, etwa wenn der Benutzer seinen Blick zeitweise abwendet oder eine Sichtbarkeit der Anzeige 140 beeinträchtigt ist. Auch dies begünstigt in einigen Beispielen eine mögliche Blindbedienung der Benutzerschnittstelle 150, etwa bei einer Verwendung in einem Kraftfahrzeug, und eine erhöhte Sicherheit, etwa indem die Wahrscheinlichkeit von gegebenenfalls gefahrenträchtigen Fehlbedienungen von Kraftfahrzeugfunktionen, insbesondere in Elektro-Kraftfahrzeugen, verringert ist.

Die Anzeigen 145a - 145d der verschiedenen Bedienelemente 155a ― 155d enthalten in einigen Beispielen Darstellungen von Nachahmungen analoger Bedienelemente, die ähnliche Gesten zu ihrer Bedienung erfordern. Dabei enthalten die Anzeigen 145a, 145b beispielsweise Darstellungen von Nachahmungen mechanischer Knöpfe oder Taster, die Anzeige 145c enthält beispielsweise eine Darstellung einer Nachahmung eines mechanischen Schiebereglers, und die Anzeige 145d enthält beispielsweise eine Darstellung einer Nachahmung eines mechanischen Drehreglers. Dies begünstigt eine intuitive Erfassung der Bedienelemente 155a ― 155d als bedienbare Bereiche der Benutzerschnittstelle 150 durch den Benutzer. Die Anzeigen 145a - 145d der Bedienelemente 155a ― 155d begünstigen auf diese Weise zudem eine zweckmäßige Interpretation der jeweils ertasteten Reliefierungen 135a - 135d durch den Benutzer in Bezug auf das Vorliegen eines bedienbaren Elements und der jeweils vorgesehenen Bediengeste. In einigen Beispielen weisen die Anzeigen 145a - 145d zudem auf einen Stellzustand des jeweils zugeordneten Bedienelements 155a ― 155d hin.

Das Benutzerschnittstellengerät 100 gestattet in einigen Beispielen eine Verwendung mit verschiedenen Benutzerschnittstellen 150. Verschiedene Benutzerschnittstellen 150 sind beispielsweise zur Bedienung verschiedener steuerbarer Geräte mittels des Benutzerschnittstellengeräts 100 vorgesehen. Verschiedene Benutzerschnittstellen 150 unterscheiden sich beispielsweise in Bezug auf wenigstens eines aus einem angezeigten Inhalt der Anzeige 140, einer funktionalen Belegung der Bedienelemente 155a ― 155d, und einem bei Betätigung eines Bedienelements 155a ― 155d mittels der Prozessoreinheit 160 erzeugten Steuersignal. Dazu enthält die Speichervorrichtung 170 in einigen Beispielen Programmcode zur Ausführung mittels der Prozessoreinheit 160, wobei der Programmcode ein wahlweises Bereitstellen jedweder von mehreren Benutzerschnittstellen 150 mittels des Benutzerschnittstellengeräts 100 gestattet. In weiteren Beispielen ist die Speichervorrichtung 170 ausgebildet zum wahlweisen Aufspielen von Programmcode entsprechend einer jeweils vorgesehenen Benutzerschnittstelle 150 unter verschiedenen verfügbaren Programmdatensätzen für verschiedene Benutzerschnittstellen 150.

In einigen Beispielen sind verschiedene Benutzerschnittstellen 150 dabei so ausgebildet, dass jede der Benutzerschnittstellen 150 wenigstens ein Bedienelement 155a - 155d aufweist, das bei einer Bereitstellung der entsprechenden Benutzerschnittstelle 150 mittels des Benutzerschnittstellengeräts 100 im Bereich der wenigstens einen Reliefierung 135a - 135d der Abdeckung 130 angeordnet ist. Dies begünstigt eine Verwendung des Benutzerschnittstellengeräts 100 unter Erzielen der voranstehend beschriebenen Vorteile für vielfältige Anwendungen.

Eine funktionale Belegung der Bedienelemente 155a - 155d ist bei verschiedenen Benutzerschnittstellen 150 vorteilhaft so gewählt, dass gleiche oder ähnliche Gerätefunktionen jeweils denselben Reliefierungen 135a - 135d zugeordnet sind. So ist beispielsweise bei verschiedenen Benutzerschnittstellen 150 eine binäre Hauptfunktion, wie etwa eine Ein/Aus-Funktion, demselben prominent positionierten Tastfeld, zum Beispiel der Reliefierung 135a, zugeordnet. Ferner ist beispielsweise bei verschiedenen Benutzerschnittstellen 150 eine regelbare Hauptfunktion, wie etwa eine Lautstärke bei einer Verwendung des Benutzerschnittstellengeräts 100 zum Steuern eines Unterhaltungssystems, eine Lautstärke bei einer Verwendung des Benutzerschnittstellengeräts 100 zum Steuern eines Kommunikationssystems, und eine VentilatorDrehzahl bei einer Verwendung des Benutzerschnittstellengeräts 100 zum Steuern eines Belüftungssystems, jeweils demselben prominent positionierten Drehelement, zum Beispiel der Rundung 135d, zugeordnet. Dem gestreckten Grat 135c ist in verschiedenen Benutzerschnittstellen 150 dagegen beispielsweise jeweils eine räumlich-linear verstellbare Funktion, wie etwa die variable Öffnung eines Schiebedachs, eine Scroll-Funktion oder eine vergleichbare Funktion zugeordnet. Eine solche einheitliche bzw. analoge Funktionsbelegung bei verschiedenen Benutzerschnittstellen 150 begünstigt ebenfalls eine Orientierung des Benutzers sowie eine intuitive und sichere Bedienung des Benutzerschnittstellengeräts 100 bei verschiedenen Anwendungen.

Abweichend von der in Fig. 1 gezeigten Form und Anordnung der Reliefierungen 135a - 135d ist in anderen Beispielen des Benutzerschnittstellengeräts 100 eine andere Gestaltung von Reliefierungen gewählt. Form und Anordnung der Reliefierungen sind dabei zudem in einigen Beispielen gemäß einer vorbestimmten spezifischen Anwendung des Benutzerschnittstellengeräts 100 gewählt.

Fig. 2 zeigt schematisch und exemplarisch eine Querschnittsansicht eines Aufbaus des berührungsempfindlichen Bildschirms 110. Dargestellt sind die Anzeigeeinheit 115, der an der Vorderseite der Anzeigeeinheit 115 angeordnete Berührungssensor 120, und die vor dem Berührungssensor 120 angeordnete Abdeckung 130. Erkennbar ist in dem gezeigten Querschnitt außerdem das Profil einer Reliefierung 135 der Abdeckung 130.

Bei dem Berührungssensor 120 handelt es sich beispielsweise um einen kapazitiven Berührungssensor. Zudem erstreckt sich der Berührungssensor 120 in einigen Beispielen zumindest im Wesentlichen über eine gesamte Anzeigefläche der Anzeigeeinheit 115.

Die Abdeckung 130 umfasst in bevorzugten Beispielen starres, transparentes Material, beispielsweise transparenten Kunststoff, wie etwa Polymethylmethacrylat, PMMA, oder Glas. Zudem ist in einigen Beispielen die Abdeckung 130 materialeinstückig ausgebildet. Dies begünstigt eine Reinigung der reliefierten Abdeckung 130 sowie Langlebigkeit und optische Eigenschaften der Abdeckung 130. Beispielsweise sind störende Grenzschichteffekte, die bei einer aufgeklebten Reliefierung etwa in Form von Lichtreflexen auftreten können, auf diese Weise vermeidbar. In Abhängigkeit von dem verwendeten Sensortyp des Berührungssensors 120 ist die Abdeckung 130 in einigen Beispielen zumindest teilweise elastisch verformbar, um eine Erfassung einer Berührung mittels des Berührungssensors 120 zu begünstigen.

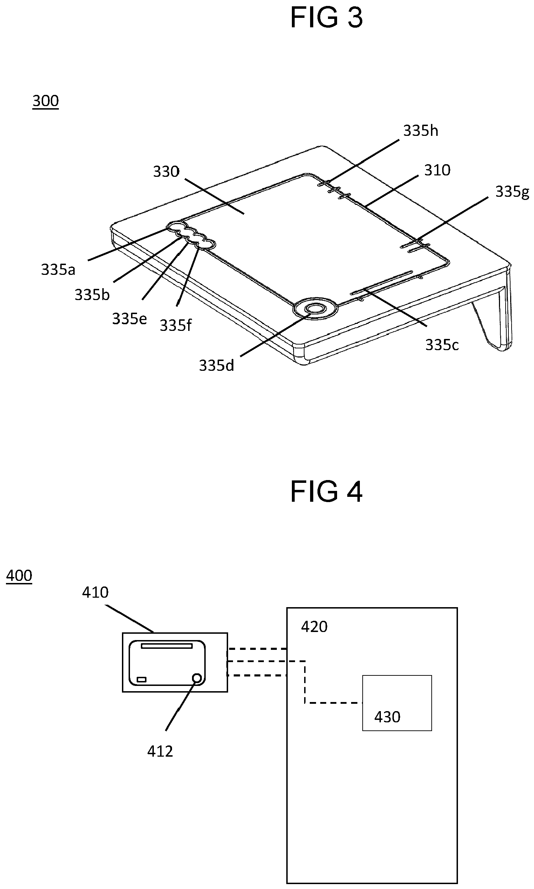

Fig. 3 zeigt eine perspektivische Ansicht eines Benutzerschnittstellengeräts 300 gemäß einem weiteren Beispiel. Für das Benutzerschnittstellengerät 300 gilt das im Zusammenhang mit dem Benutzerschnittstellengerät 100 Gesagte entsprechend, soweit sich aus dem Nachfolgenden nichts anderes ergibt.

Das Benutzerschnittstellengerät 300 umfasst einen berührungsempfindlichen Bildschirm 310 mit einer Abdeckung 330. Ähnlich wie bei dem Benutzerschnittstellengerät 100 weist auch die Abdeckung 330 mehrere Reliefierungen 335a - 335h auf. Diese sind ebenfalls im Wesentlichen nah einem Randbereich des berührungsempfindlichen Bildschirms 310 angeordnet. Zudem umfassen die Reliefierungen 335a - 335h wiederum wenigstens teilweise umgrenzte Tastfelder 335a, 335b, 335e, 335f, einen gestreckten Grat 335c und eine Rundung 335d. Abweichend von dem in Fig. 1 gezeigten Beispiel umfassen die Reliefierungen 335a - 335h zwei zusätzliche Tastfelder 335e, 335f, eine Anordnung des gestreckten Grats 335c parallel zu einer kurzen Seite des berührungsempfindlichen Bildschirms 310 und eine volle Rundung 335d. Zudem umfassen die Reliefierungen 335a - 335h wenigstens einen Trennsteg 335g, mittels dessen beispielsweise verschiedene Auswahlfelder einer Benutzerschnittstelle voneinander getrennt sind, sowie wenigstens einen Auswahlsteg 335h, dem beispielsweise ein wählbares Element einer Benutzerschnittstelle zugeordnet ist.

Fig. 4 zeigt schematisch und exemplarisch ein System 400. Das System 400 umfasst ein steuerbares Gerät 420, das eine steuerbare Gerätefunktion 430 aufweist. Das System 400 umfasst ferner ein Benutzerschnittstellengerät 410. Das Benutzerschnittstellengerät 410 ist mit dem steuerbaren Gerät 420 kommunikativ verbunden. Bei dem Benutzerschnittstellengerät handelt es sich beispielsweise um ein Benutzerschnittstellengerät nach einem der voranstehend im Zusammenhang mit Fig. 1 bis 3 beschriebenen Beispiele. Insbesondere weist das Benutzerschnittstellengerät ein Bedienelement 412, das im Bereich einer Anzeige einer Benutzerschnittstelle, die mittels des Benutzerschnittstellengeräts 410 bereitgestellt ist, angeordnet ist.

Das Benutzerschnittstellengerät 410 ist derart konfiguriert und derart mit dem steuerbaren Gerät 420 kommunikativ verbunden, dass die Gerätefunktion 430 mittels des Bedienelements 412, insbesondere durch Benutzereingabe im Bereich des Bedienelements 412, steuerbar ist, wie in Fig. 4 durch die gestrichelten Linien dargestellt.

In einigen Beispielen ist das Benutzerschnittstellengerät 410 an dem steuerbaren Gerät 420 befestigt, beispielsweise in einem Gehäuse des steuerbaren Geräts 420 installiert. Das Benutzerschnittstellengerät ist dabei in einigen Beispielen verdrahtet und/oder über elektrische Kontakte mit dem steuerbaren Gerät 430 verbunden. In einigen Beispielen ist das Benutzerschnittstellengerät 410 dabei zudem dazu ausgebildet, vor und/oder nach Befestigen des Benutzerschnittstellengeräts 410 an dem steuerbaren Gerät 420 für eine Bedienung der wenigstens einen Gerätefunktion 430 des steuerbaren Geräts 420 konfiguriert zu werden. Dies erfolgt in einigen Beispielen wenigstens teilweise durch Aufspielen von Programmcode auf eine Speichervorrichtung des Benutzerschnittstellengeräts 410, der einer für die Bedienung des steuerbaren Geräts 420 vorgesehenen Benutzerschnittstelle entspricht. In weiteren Beispielen erfolgt das Konfigurieren des Benutzerschnittstellengeräts 410 durch Auswählen der für die Bedienung des steuerbaren Geräts 420 vorgesehenen Benutzerschnittstelle unter verschiedenen Benutzerschnittstellen, deren Programmcode jeweils auf der Speichervorrichtung des Benutzerschnittstellengeräts 410 gespeichert ist.

In einigen Beispielen ist das Benutzerschnittstellengerät 410 als mobiles Gerät ausgebildet. Dabei ist das Benutzerschnittstellengerät beispielsweise mittels drahtloser Kommunikation mit dem steuerbaren Gerät 420 kommunikativ verbunden. Für Beispiele, in denen das Benutzerschnittstellengerät als mobiles Gerät ausgebildet ist, gilt das voranstehend Gesagte entsprechend, bezüglich einer möglichen Konfigurierung des Benutzerschnittstellengeräts 410 wenigstens teilweise durch Aufspielen von Programmcode und/oder durch Auswählen einer vorgesehenen Benutzerschnittstelle unter verschiedenen Benutzerschnittstellen, deren Programmcode auf einer Speichervorrichtung des Benutzerschnittstellengeräts 410 gespeichert ist.

## Patentansprüche

1. Benutzerschnittstellengerät (100; 300; 410) umfassend:
wenigstens einen berührungsempfindlichen Bildschirm (110; 310) umfassend:
eine Anzeigeeinheit (115), die dazu ausgebildet ist, eine grafische Anzeige (140) einer Benutzerschnittstelle (150) auszugeben, und
einen Berührungssensor (120), der dazu ausgebildet ist, eine Berührung des Benutzerschnittstellengeräts durch einen Benutzer im Bereich der grafischen Anzeige (140) der Benutzerschnittstelle (150) zu erfassen, und
wenigstens eine Prozessoreinheit (160), die mit dem berührungsempfindlichen Bildschirm (110) kommunikativ verbunden ist, und die dazu ausgebildet ist, ein Bildsignal, das der grafischen Anzeige (140) der Benutzerschnittstelle (150) zugeordnet ist, zur Ausgabe mittels der Anzeigeeinheit (115) auszugeben, und ein Eingabesignal, das auf eine Berührung des Benutzerschnittstellengeräts durch den Benutzer im Bereich der grafischen Anzeige (140) der Benutzerschnittstelle (150) hinweist, von dem Berührungssensor (120) zu empfangen,
**dadurch gekennzeichnet, dass**
der berührungsempfindliche Bildschirm (110) ferner eine Abdeckung (130; 330) mit wenigstens einer Reliefierung (135a - 135d; 335a - 335h), die im Bereich der grafischen Anzeige (140) angeordnet ist, umfasst, und
die Benutzerschnittstelle (150) wenigstens ein Bedienelement (155a - 155d; 412) aufweist, wobei eine Anzeige (145a - 145d) des wenigstens einen Bedienelements (155a - 155d; 412) mittels der Anzeigeeinheit (115) im Bereich der wenigstens einen Reliefierung (135a - 135d; 335a - 335h) erfolgt.

2. Benutzerschnittstellengerät nach Anspruch 1, wobei die Reliefierung (135a - 135d; 335a - 335h) gemäß einer Bediengeste, die zum Betätigen des Bedienelements (155a - 155d; 412) vorgesehen ist, ausgebildet ist.

3. Benutzerschnittstellengerät nach Anspruch 2, wobei die Bediengeste wenigstens eines aus einer Tastgeste, einer Gleitgeste und einer Drehgeste umfasst und die Reliefierung (135a - 135d; 335a - 335h) wenigstens eines aus einer umgrenzten Fläche (135a , 135b; 335a, 335b, 335e, 335f), einem Grat (135c; 335c), einem Graben, einer Ausnehmung, einer Fräsung, einem Vorspung, einer Vorkragung, einer Wölbung und einer Rundung (135d; 335d) umfasst.

4. Benutzerschnittstellengerät nach einem der vorhergehenden Ansprüche, wobei die Anzeige (145a - 145d) des Bedienelements (155a - 155d; 412) auf einen Stellzustand des Bedienelements (155a - 155d; 412) hinweist.

5. Benutzerschnittstellengerät nach einem der vorhergehenden Ansprüche, wobei die Benutzerschnittstelle (150) mehrere Bedienelemente (155a - 155d) aufweist.

6. Benutzerschnittstellengerät nach Anspruch 5, wobei die mehreren Bedienelemente (155a - 155d) wenigstens zwei verschiedene Bedienelemente umfassen, und zum Betätigen der verschiedenen Bedienelemente verschiedene Bediengesten vorgesehen sind.

7. Benutzerschnittstellengerät nach einem der vorhergehenden Ansprüche, wobei die Abdeckung (130; 330) materialeinstückig ausgebildet ist.

8. Benutzerschnittstellengerät nach einem der vorhergehenden Ansprüche, wobei die Prozessoreinheit (160) programmierbar ist, um wahlweise jedwede von mehreren Benutzerschnittstellen (150) mittels des Benutzerschnittstellengeräts bereitzustellen.

9. Benutzerschnittstellengerät nach einem der vorhergehenden Ansprüche, wobei das Benutzerschnittstellengerät ferner eine Speichervorrichtung (170) aufweist, die mit der Prozessoreinheit (160) kommunikativ verbunden ist und die zum Speichern von Programmcode zur Ausführung mittels der Prozessoreinheit (160) ausgebildet ist, wobei die Speichervorrichtung (170) zum wahlweisen Aufspielen von Programmcode entsprechend verschiedenen Benutzerschnittstellen (150) vorgesehen ist und/oder Programmcode enthält zum wahlweisen Bereitstellen jedweder von mehreren Benutzerschnittstellen (150) mittels des Benutzerschnittstellengeräts.

10. Benutzerschnittstellengerät nach Anspruch 8 oder 9, wobei jedwede der mehreren Benutzerschnittstellen (150) wenigstens ein Bedienelement (155a - 155d; 412) aufweist, dessen Anzeige (145a - 145d) mittels der Anzeigeeinheit (115) im Bereich der wenigstens einen Reliefierung (135a - 135d; 335a - 335h) erfolgt.

11. Benutzerschnittstellengerät nach einem der vorhergehenden Ansprüche, wobei die Prozessoreinheit (160) ferner dazu ausgebildet ist, wenigstens teilweise auf der Grundlage des Eingangssignals ein Steuersignal, das zum Steuern einer Gerätefunktion (430) eines mittels des Benutzerschnittstellengeräts steuerbaren Geräts (420) vorgesehen ist, zu erzeugen und das Steuersignal an das steuerbare Gerät (420) auszugeben.

12. Benutzerschnittstellengerät nach einem der vorhergehenden Ansprüche, wobei das Benutzerschnittstellengerät (410) zur Befestigung an dem steuerbaren Gerät (420) vorgesehen ist.

13. Benutzerschnittstellengerät nach einem der vorhergehenden Ansprüche, wobei das Benutzerschnittstellengerät (100; 300; 412) ein mobiles Gerät ist.

14. System (400) umfassend:
ein Benutzerschnittstellengerät (410) nach einem der vorhergehenden Ansprüche und
wenigstens ein steuerbares Gerät (420), das wenigstens eine Gerätefunktion (430) aufweist, die mittels des wenigstens einen Bedienelements (412) des Benutzerschnittstellengeräts (410) steuerbar ist.
